# EUROPÄISCHE PATENTANMELDUNG

(11) **EP 0 969 033 A2**
(43) Veröffentlichungstag der Anmeldung: **05.01.2000**
(21) Anmeldenummer: 99112074.2
(22) Anmeldetag: 23.06.1999
(51) Int. Cl.: C08G 77/60, C08K 5/54

(54) **Neue oligomere Organosiliciumverbindungen, deren Verwendung in Kautschukmischungen und zur Herstellung von Formkörpern**

(30) Priorität: 01.07.1998 DE 19829390
(71) Anmelder: Degussa-Hüls Aktiengesellschaft, 60287 Frankfurt am Main (DE)
(72) Erfinder: Batz-Sohn, Christoph, Dr., 63452 Hanau (DE); Luginsland, Hans-Detlef, Dr., 50968 Köln (DE)

(57) **Zusammenfassung**

Die vorliegende Erfindung betrifft neue oligomere Organosiliciumverbindungen, der allgemeinen Formel I 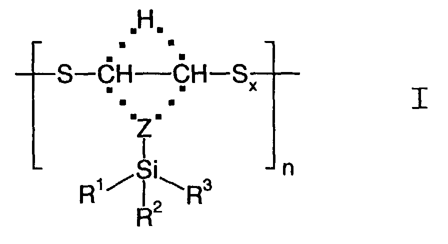 worin
R¹, R², R³, unabhängig voneinander, H, (C₁ - C₄)Alkyl, (C₁ - C₄)Alkoxy, (C₁ - C₄)Haloalkoxy, (C₁ - C₄)Haloalkyl, Phenyl, Aryl oder Aralkyl und
Z einen Alkylidenrest mit 0 - 6 Kohlenstoffatomen bedeuten, x im statistischen Mittel 1 - 6 und
n = 1 - 150 sein kann und . . . bedeutet, daß Z sowohl an das eine oder das andere C-Atom gebunden sein kann und die jeweilige freie Valenz durch einen Wasserstoff besetzt ist,
sowie deren Verwendung in Kautschukmischungen und zur Herstellung von Formkörpern, insbesondere Luftreifen.

## Beschreibung

Die vorliegende Erfindung betrifft neue oligomere Organosiliciumverbindungen, ein Verfahren zu deren Herstellung sowie deren Verwendung in Kautschukmischungen und zur Herstellung von Formkörpern.

Es ist bekannt, schwefelhaltige Organosiliciumverbindungen wie 3-Mercaptopropyltrimethoxysilan oder Bis-(3-[Triethoxysilyl]-propyl)tetrasulfan als Silanhaftvermittler oder Verstärkungsadditiv in oxidisch gefüllten Kautschukmischungen einzusetzen, unter anderem für Laufflächen und andere Teile von Autoreifen (DE 2 141 159, DE 2 212 239, US 3 978 103, US 4 048 206).

Des weiteren ist bekannt, daß schwefelhaltige Silanhaftvermittler bei der Herstellung von Dichtungsmassen, Gießformen für den Metallguß, Farb- und Schutzanstrichen, Klebstoffen, Asphaltmischungen und oxidisch gefüllten Kunststoffen eingesetzt werden.

Schließlich ergeben sich Anwendungsmöglichkeiten bei der Fixierung von Wirkstoffen und funktionellen Einheiten auf anorganischen Trägermaterialien, z. B. bei der Immobilisierung von homogenen Katalysatoren und Enzymen, bei der Herstellung von Festbettkatalysatoren und bei der Flüssigkeitschromatographie.

Es ist weiterhin bekannt, daß die zur Haftvermittlung in oxidisch gefüllten Kautschukmischungen hauptsächlich verwendeten längerkettigen Polysulfane, insbesondere das Bis-(3-[Triethoxysilyl]-propyl)tetrasulfan besonderer Sorgfalt bei der Verarbeitung im Kautschuk bedarf, um Vorvulkanisation bei der Mischung der Komponenten zu vermeiden. Die in dieser Beziehung vorteilhafte Verwendung von Organosilanen mit kürzeren Polysulfanketten, insbesondere mit Disulfaneinheiten, im Hinblick auf die Verarbeitung und Eigenschaften der Vulkanisate wurde in der EP-A 0732 362 (= US-PS 5 580 919) und bei Panzer (L. Panzer, Am. Chem. Soc., Rubber Div. Meeting 1997) beschrieben. Allerdings bewirkt eine Verkürzung der Polysulfanketten eine unerwünschte, geringere Vernetzungsausbeute zwischen dem oxidischen Füllstoft und dem Kautschukpolymeren.

In DD 262 231 A1 und EP- B1 0 466 066 werden schwefelreiche, oligomere Organoorganooxysilane mit einem Cycloalkenyl-Baustein beschrieben, die jedoch den Nachteil haben, daß ihre Verwendung als Silanhaftmittel oder Verstärkungsadditiv, zu Vulkanisaten mit eher durchschnittlichen statischen und dynamischen Eigenschaften führt, insbesondere bei der Zugfestigkeit, der Bruchenergie und dem Spannungswert. Zudem ist die Herstellung dieses Verbindungstyps kompliziert und teuer.

Es wurde nun gefunden, daß die oben genannten Nachteile des Standes der Technik, durch die Verwendung der erfindungsgemäßen neuen oligomeren Organosiliciumverbindungen als Haftvermittler oder Verstärkungsadditiv in Kauschukmischungen, weitgehend vermieden werden können.

Demgemäß betrifft die vorliegende Erfindung neue oligomere Organosiliciumverbindungen der allgemeinen Formel I 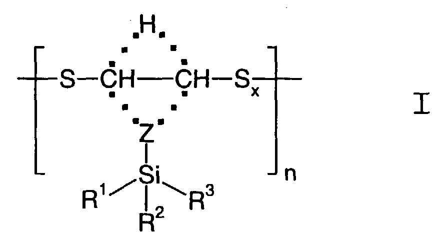 worin
R¹, R², R³, unabhängig voneinander, H, (C₁ - C₄)Alkyl, (C₁ - C₄)Alkoxy, (C₁ - C₄)Haloalkoxy, (C₁ - C₄)Haloalkyl, Phenyl, Aryl oder Aralkyl und Z einen Alkylidenrest mit 0 - 6 Kohlenstoffatomen bedeuten, x im statistischen Mittel 1 - 6 und
n = 1 - 150 sein kann und . . . bedeutet, daß Z sowohl an das eine oder das andere C-Atom gebunden sein kann und die jeweilige freie Valenz durch einen Wasserstoff besetzt ist.

Bevorzugte Ausführungsformen der erfindungsgemäßen oligomeren Organosiliciumverbindungen sind in den Unteransprüchen genannt.

Insbesondere eignen sich für die erfindungsgemäße Verwendung Organosiliciumverbindungen in denen R¹, R² und R³ = Ethoxy, Z = CH₂CH₂ und x = 1 sind.

Die erfindungsgemäßen oligomeren Organosiliciumverbindungen können dabei zyklisch, verzweigt oder linear ausgebildet sein. Bevorzugt sind Verbindungen in denen n = 20 bis 130, besonders bevorzugt n= 50 bis 100, ist.

Die erfindungsgemäßen Verbindungen können sowohl als einzelne Verbindung mit einem definierten Molekulargewicht, als auch als Oligomerengemisch mit einer Molekulargewichtsverteilung vorliegen. Aus verfahrenstechnischen Gründen ist es in der Regel einfacher, Oligomerengemische herzustellen und anzunehmen.

Die Herstellung der erfindungsgemäßen Verbindungen der allgemeinen Formel I kann einfach und in vorteilhafter Weise erfolgen, indem Verbindungen der allgemeinen Formel II 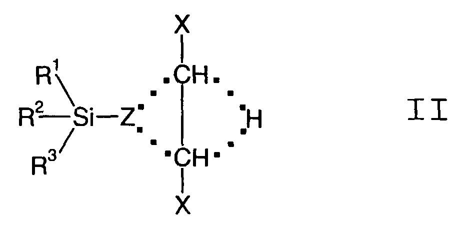 worin
R¹, R², R³, Z und . . . die oben angegebene Bedeutung besitzen, X gleich Halogen sein kann, mit MSH oder M₂S_{Y}, wobei M eine Metallion und y im statistischen Mittel eine Zahl zwischen 2 und 6 sein kann oder mit M₂S und S, wobei M ein Metallion ist, gegebenenfalls in einem Lösungsmittel und gegebenenfalls bei Reaktionstemperaturen zwischen 20°C und 150°C und gegebenenfalls unter katalytischen Bedingungen bei Drücken zwischen Normaldruck oder einem Überdruck bis zu 6 bar zu Verbindungen der allgemeinen Formel I umgesetzt werden.

Bei der Herstellung der neuen Verbindungen geht man vorteilhafterweise wie folgt vor. Zu einer Suspension von MSH oder M₂S und S, bzw. vorher hergestelltem M₂S_{y}, in einem inerten geeigneten Lösungsmittel oder Gemischen davon, wie beispielsweise in einem aromatischen Lösungsmittel wie Chlorbenzol, einem halogenierten Kohlenwasserstoff, wie Chloroform, Methylenchlorid, einem Ether wie Diisopropylether, tert. Butylmethylether, Tetrahydrofuran oder Diethylether, Acetonitril oder Carbonsäureester, beispielsweise Essigsäureethylester, Essigsäuremethylester oder Essigsäureisopropylester, einem Alkohol, beispielsweise Methanol, Ethanol, n-Propanol, i-Propanol, n-Butanol, sec. Butanol oder tert. Butanol wird eine Verbindung der Formel II, worin R¹, R², R³, X, Z und . . . die oben angegebene Bedeutung haben, gegeben. Man erhitzt 1 bis 24 h, vorzugsweise 1 bis 8 h bei Normaldruck oder Überdruck bis zu 6 bar, vorzugsweise bei Normaldruck, auf Temperaturen zwischen 20°C und 150°C, vorzugsweise bei 35°C bis 80°C, besonderes bevorzugt bei 55 °C bis 65°C und filtriert nach Reaktionsende vom entstandenen Niederschlag ab. Nach dem Entfernen des Lösungsmittels verbleiben die neuen Verbindungen des Typs I i. d. R. als viskose Flüssigkeiten.

Als besonders bevorzugtes Lösungsmittel wird Ethanol verwendet. Vorteilhafterweise werden die Umsetzungen unter absoluten Bedingungen, d. h. unter Feuchtigkeitsausschluß durchgeführt. Es empfiehlt sich daher vorgetrocknete Lösungsmittel, wie beispielsweise Ethanol p. a., zu verwenden.

Als bevorzugte Metallionen M werden Ammoniumionen, Natriumionen oder Kaliumionen verwendet. Besonders geeignet ist dabei die Verwendung der entsprechenden Natriumverbindung.

Verschiedene Verfahren der oben beschriebenen Art zur Sulfidierung sind bekannt und in JP 722 8588, US-A 54 05 985 und US-A 54 66 848 beschrieben. Die Umsetzung kann katalysiert erfolgen. Der Katalysator kann dabei in katalytischen oder stöchiometrischen Mengen eingesetzt werden.

Die Verbindungen des Typs II werden dabei ausgehend von den entsprechenden ungesättigten Verbindungen analog DD 262 331 A1 oder EP-A2 0 350 600 erhalten. Die ungesättigten Verbindungen können, wie in EP-A2 0 350 600 beschrieben, oder in analoger Weise erhalten werden.

Die Verbindung des allgemeinen Typs II können auch direkt aus den entsprechenden ungesättigten Verbindungen gemäß EP-B1 0 446 066 erhalten werden. Auf dieses Patent wird ausdrücklich hingewiesen und der Inhalt dieses Patents soll Gegenstand der vorliegenden Offenbarung sein.

Unter der Bezeichnung "Alkyl" sind sowohl "geradkettige" als auch "verzweigte" Alkylgruppen zu verstehen. Unter der Bezeichnung "geradkettige Alkylgruppe" sind beispielsweise Reste wie Methyl, Ethyl, n-Propyl, n-Butyl, n-Pentyl, n-Hexyl, unter "verzweigter Alkylgruppe" Reste wie beispielsweise Isopropyl oder tert.-Butyl zu verstehen. Die Bezeichnung Halogen steht für Fluor, Chlor, Brom oder Jod. Die Bezeichnung "Alkoxy" stellt Reste wie beispielsweise Methoxy, Ethoxy, Propoxy, Butoxy, Isopropoxy, Isobutoxy oder Pentoxy dar.

Unter "Aryl" sind im erfindungsgemäßen Rahmen (C₁ - C₆)alkyl-, (C₁ - C₆)alkoxy-, halogen- oder mit Heteroatomen wie N, O, P oder S substituierte Phenyle, Biphenyle oder sonstige benzoide Verbindungen zu verstehen. "Arylalkyl" ist so zu verstehen, daß die oben bezeichneten "Aryle" über eine (C₁ - C₆)Alkylkette, die ihrerseits (C₁ -C₄)alkyl- oder halogensubstituiert sein kann, mit dem entsprechenden Siliciumatom verbunden ist. Verfügt "Aryl" über ein Heteroatom wie O oder S, dann kann die (C₁ -C₆)Alkylkette auch über das Heteroatom mit dem Siliciumatom eine Verbindung herstellen.

Bei Angabe der Substituenten, wie z. B. (C₁ - C₄) Alkoxy, bezeichnet die Zahl im Index die Anzahl aller Kohlenstoffatome im Rest.

In den Beispielen 1 und 2 ist in exemplarischer Weise die Darstellung der erfindungsgemäßen, oligomeren Organosiliciumverbindungen gezeigt.

Die so auf einfache Art und Weise erhalten oligomeren Organosiliciumverbindungen eignen sich überraschenderweise besonders gut für die Verwendung in Kautschukmischungen.

Kautschukmischungen, die die erfindungsgemäßen Organosiliciumverbindungen als Haftvermittler oder Verstärkungsadditiv enthalten und nach einem Vulkanisationsschritt resultierende Formkörper, insbesondere Luftreifen oder Reifenlaufflächen, besitzen nach der erfindungsgemäßen Durchführung der Verfahren einen niedrigen Rollwiderstand bei gleichzeitig guter Nässehaftung und hohem Abriebwiderstand.

Gegenstand der vorliegenden Erfindung sind daher Kautschukmischungen enthaltend Kautschuk, Füllstoff, insbesondere auch gefällte Kieselsäure und ggf. weitere Kautschukhilfsmittel, sowie mindestens eine erfindungsgemäße Organosiliciumverbindungen, welche aus der in Anspruch 1 genannten Struktur aufgebaut ist und welche in Mengen von 0,1 bis 15 Gew-%, besonders bevorzugt 5-10 Gew.%, bezogen auf die Menge des eingesetzten oxidischen Füllstoffs, eingesetzt wird.

Bei der Verwendung der beanspruchten Organosiliciumverbindungen in Kautschukmischungen zeigen sich gegenüber den Mischungen nach dem Stand der Technik Vorteile in den statischen und dynamischen Vulkanisatdaten (vgl. Tabelle 4). Dies zeigt sich insbesondere in einer höheren Zugfestigkeit, Bruchenergie und einem höheren Spannungswert 300 %. Zudem zeigt die Mischung mit den beanspruchten Organosiliciumverbindungen einen abgesenkten Wärmeaufbau (Goodrich-Flexometertest), was ein positives Hystereseverhalten aufzeigt.

Die Zugabe der erfindungsgemäßen Organosiliciumverbindungen, sowie die Zugabe der Füllstoffe erfolgt bevorzugt bei Massetemperaturen von 100 bis 200 °C, sie kann jedoch auch später bei tieferen Temperaturen (40 bis 100 °C) z.B. zusammen mit weiteren Kautschukhilfsmitteln erfolgen.

Die erfindungsgemäßen Organosiliciumverbindungen können sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen in Frage:
- Ruße: Die hierbei zu verwendenden Ruße sind nach dem Flammruß-, Furnace- oder Gasruß-Verfahren hergestellt und besitzen BET-Oberflächen von 20 bis 200 m²/g. Die Ruße können ggf. auch Heteroatome wie z.B. Si enthalten.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate wie Magnesiumsilikat oder Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt werden Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt.

Die genannten Füllstoffe können alleine oder im Gemisch eingesetzt werden. In einer besonders bevorzugten Ausführung des Verfahrens werden 10 bis 150 Gew.-Teile helle Füllstoffe, gegebenenfalls zusammen mit 0 bis 100 Gew.-Teilen Ruß, sowie 0,1 bis 15 Gew.-Teile, bevorzugt 5 bis 10 Gew.-Teile einer Verbindung der Formel (I), jeweils bezogen auf 100 Gew.-Teile des eingesetzten Füllstoffs, zur Herstellung der Mischungen eingesetzt.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologle, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte L-SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsprodukte enthalten wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Die oligomeren Silane können alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den erfindungsgemäßen Silanen kann in üblichen Mischaggregaten, wie Walzen, Innenmischern und Mischextrudern, durchgeführt werden. Die erfindungsgemäßen Kautschukvulkanisate eignen sich zur Herstellung von Formkörpern, z.B. für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

In den Beispielen 3 bis 5 wird die Herstellung der Kautschukmischungen und der Vulkanisate exemplarisch beschrieben. Anhand von Beispiel 4, das eine erfindungsgemäße, oligomere Organosiliciumverbindung als Haftvermittler verwendet, werden die gegenüber dem Stand der Technik (Vergleichsbeispiele 3 und 5) überlegenen Eigenschaften der erfindungsgemäßen Verbindungen deutlich.

### Beispiele 1-2: Herstellung der Organosilanpolysulfane

### Beispiel 1:

1. 86 g Na₂S und 35.0 g Schwefel werden in 1.50 1 Ethanol suspendiert und die Mischung auf 60°C erhitzt. Dann werden tropfenweise 289 g (1.00 mol) 3,4-Dichlorbutyltriethoxysilan zugegeben und die Mischung 5 h am Rückfluß erhitzt. Danach läßt man abkühlen und filtriert vom entstandenen NaCl ab. Nach dem destillativen Entfernen des Lösungsmittels verbleiben 225 g (80% d. Theorie) der Verbindung der Formel I mit R¹=EtO, R²=EtO, R³=EtO, Z=CH₂-CH₂, x=1.

### Analysenwerte:

| Berechnet | | |
|---|---|---|
| C 42.52 | H 7.85 | S 22.7 |

| Gefunden | | |
|---|---|---|
| C 42.70 | H 7.92 | S 22.52 |

### Beispiel 2:

2. 86 g Na₂S und 71.0 g Schwefel werden in 1.50 l Ethanol suspendiert und die Mischung auf 60°C erhitzt. Dann werden tropfenweise 289 g (1.00 mol) 3,4-Dichlorbutyl-triethoxysilan zugegeben und die Mischung 5 h am Rückfluß erhitzt. Danach läßt man abkühlen und filtriert vom entstandenen NaCl ab. Nach dem destillativen Entfernen des Lösungsmittels verbleiben 245 g (78% d. Theorie) der Verbindung der Formel I mit R¹=EtO, R²=EtO, R³=EtO, Z=CH₂-CH₂, x=1.45.

### Analysenwerte:

| Berechnet | | |
|---|---|---|
| C 40.45 | H 7.47 | S 26.46 |

| Gefunden | | |
|---|---|---|
| C 40.70 | H 7.56 | S 26.3 |

### Beispiele 3-5: Herstellung der Kautschukmischungen und Vulkanisate

### Allgemeine Durchführungsvorschrift

Die für die Kautschukmischungen verwendete Rezeptur ist in folgender Tabelle 1 angegeben. Dabei bedeutet die Einheit phr Gewichtsanteile bezogen auf 100 Teile des eingesetzten Rohkautschuks.

**Tabelle 1**

| Substanz | Menge [phr] |
|---|---|
| | |

| 1. Stufe | |
|---|---|
| Buna VSL 5025-1 | 96.0 |
| Buna CB 24 | 30.0 |
| Ultrasil VN3 | 80.0 |
| ZnO | 3.0 |
| Stearinsäure | 2.0 |
| Naftolen ZD | 10.0 |
| Vulkanox 4020 | 1.5 |
| Protector G35P | 1.0 |
| TESPT | 6.4 |

| 2. Stufe | |
|---|---|
| Batch Stufe 1 | |

| 3. Stufe | |
|---|---|
| Batch Stufe 2 | |
| Vulkacit D | 2.0 |
| Vulkacit CZ | 1.5 |
| Schwefel | 1.5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50 ± 5 auf.

Bei dem Polymer Buna CB 24 handelt es sich um ein cis 1,4 Polybutadien (Neodymtyp) der Bayer AG mit cis 1,4-Gehalt von 97 %, einem trans 1,4-Gehalt von 2 %, einem 1,2-Gehalt von 1 % und einer Mooney-Viskosität zwischen 39 und 49.

Die Kieselsäure VN3 der Degussa AG besitzt eine BET-Oberfläche von 175 m²/g.
Bis-(3-[Triethoxysilyl]-propyl)tetrasulfan (TESPT) wird unter dem Handelsnamen Si 69 von der Degussa AG vertrieben.

Als aromatisches Öl wurde Naftolen ZD der Chemetall verwendet; bei Vulkanox 4020 handelt es sich um PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Die Kautschukmischung wird dreistufig in einem Innenmischer entsprechend der folgenden tabellarischen Aufstellung hergestellt:

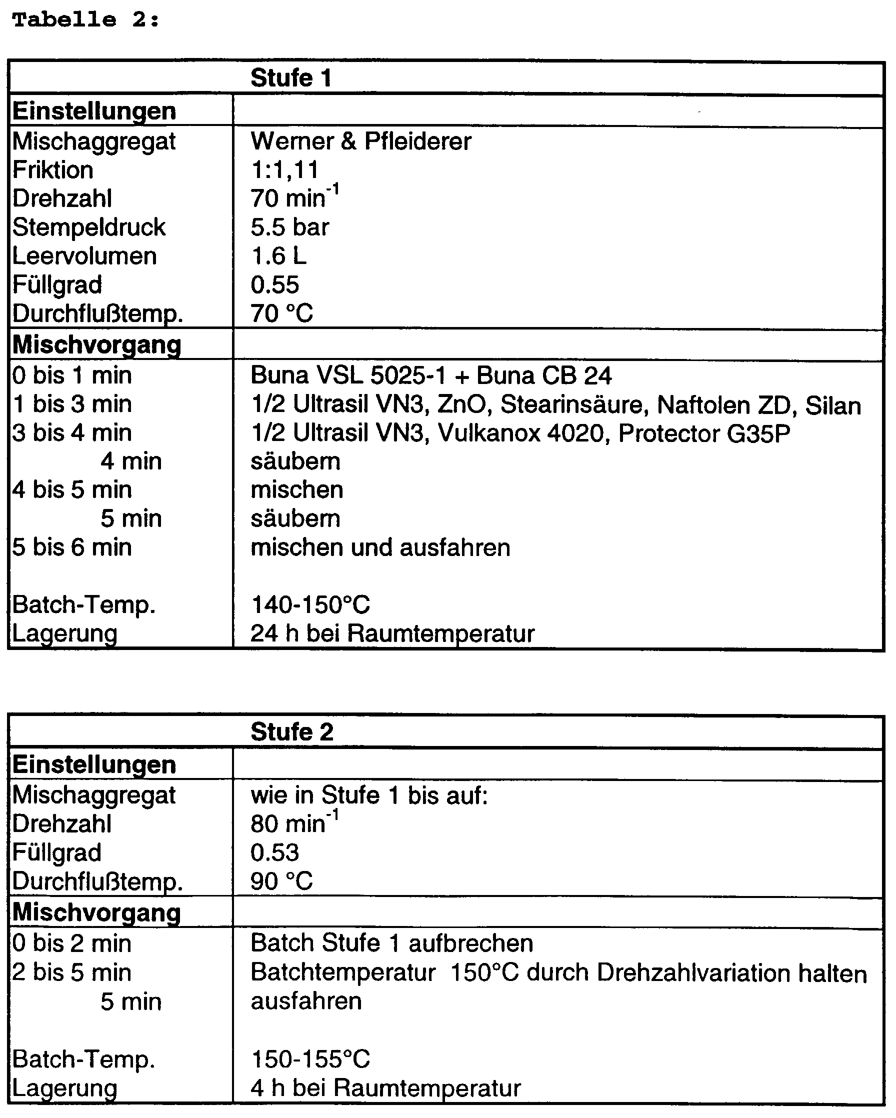

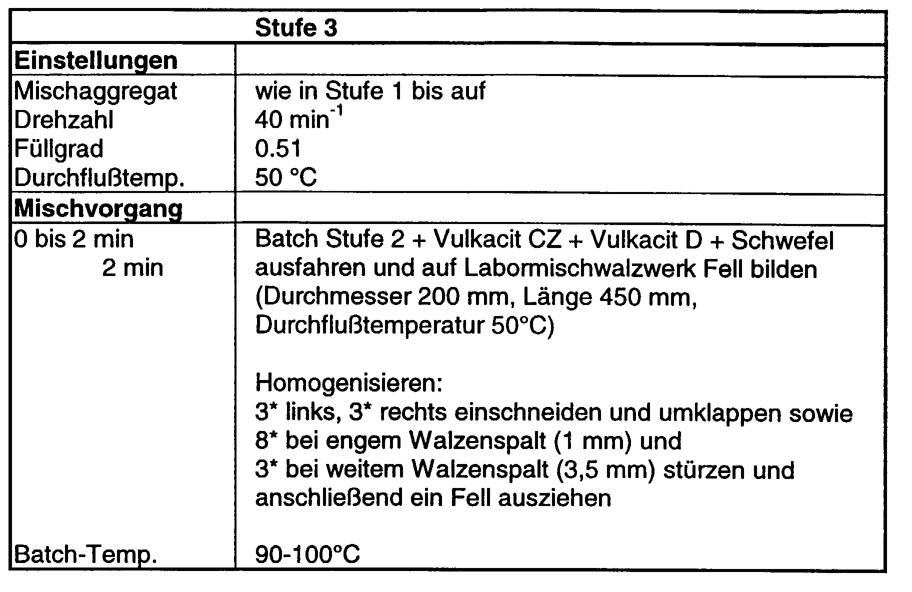

Das allgemeine Verfahren zur Herstellung von Kautschukmischungen und deren Vulkanisate ist in dem folgendem Buch beschrieben: 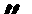 Rubber Technology Handbook", W. Hofmann, Hanser Verlag 1994.

Die Vulkanisationszeit für die Prüfkörper beträgt 60 Minuten bei 165°C.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 0 und 60°C | ASTM D 5308 |
| Viskoelastische Eigenschaften, 0 und 60°C, 16 Hz, 50 N Vorkraft und 25 N Amplitudenkraft | DIN 53 513, ISO 2856 |
| Komplexer Modul E*, | |
| Verlustfaktor tan δ | |
| Goodrich-Flexometer, 25 min bei 23°C und 0.175 inch Hub | DIN 53 533, ASTM D 623 A |
| DIN-Abrieb, 10 N Kraft | DIN 53 516 |
| Dispersion | ISO/DIS 11345 |

### Beispiele 3, 4 und 5:

Die Durchführung der Beispiele 3 (Vergleichsbeispiel), 4 und 5 (Vergleichsbeispiel) erfolgt gemäß der Allgemeinen Durchführungsvorschrift.

In Abänderung zu Vergleichsbeispiel 3, wird der Mischung in dem Beispiel 4 statt Bis-(3-[Triethoxysilyl]-propyl)tetrasilan (TESPT), die Organosiliciumverbindung aus Beispiel 1 zugesetzt. Beispiel 5 ist ebenfalls ein Vergleichsbeispiel und enthält statt TESPT, das oligomere Organosilan gemäß EP-B1 0 466 066. Folgende gummitechnische Daten für Rohmischung und Vulkanisat ergeben sich (Tabelle 4):

**Tabelle 4**

| **Rohmischungsergebnisse** | | | | |
|---|---|---|---|---|
| Merkmal: | Einheit: | 3 | 4 | 5 |
| ML(1+4), 100°C(3. Stufe) | [ME] | 54 | 57 | 53 |

| **MDR 165°C** | | | | |
|---|---|---|---|---|
| Dmax-Dmin | [dNm] | 17.56 | 20.70 | 19.47 |
| t 10% | [min] | 1.99 | 1.66 | 2.02 |
| t 90% | [min] | 15.69 | 42.19 | 31.89 |

| **Vulkanisatergebnisse** | | | | |
|---|---|---|---|---|
| Merkmal: | Einheit: | 3 | 4 | 5 |
| **Zugversuch am Ring** | | | | |
| Zugfestigkeit | [MPa] | 12.4 | 14.3 | 12.8 |
| Spannungswert 100% | [MPa] | 2.0 | 2.1 | 1.9 |
| Spannungswert 300% | [MPa] | 10.1 | 10.8 | 9.4 |
| Bruchdehnung | [%] | 340 | 360 | 370 |
| Bruchenergie | [J] | 55.2 | 67.7 | 62.3 |
| Shore-A-Härte (23°C) | [SH] | 64 | 65 | 66 |
| Ball-Rebound (0°C) | [%] | 11.1 | 11.6 | 11.5 |
| Ball-Rebound (60°C) | [%] | 60.4 | 59.2 | 56.4 |
| DIN-Abrieb | [mm³] | 70 | 69 | 87 |

| **Viskoelastische Prüfung** | | | | |
|---|---|---|---|---|
| Dyn. Dehnmodul E* (0°C) | [MPa] | 26.1 | 24.3 | 25.6 |
| Dyn. Dehnmodul E* (60°C) | [MPa] | 9.4 | 9.4 | 9.4 |
| Verlustfaktor tan δ (0°C) | [-] | 0.484 | 0.487 | 0.491 |
| Verlustfaktor tan δ (60°C) | [-] | 0.116 | 0.121 | 0.129 |

| **Goodrich-Flexometer** | | | | |
|---|---|---|---|---|
| Kontakttemperatur | [°C] | 46 | 42 | 43 |
| Einstichtemperatur | [°C] | 88 | 83 | 85 |
| Permanent Set | [%] | 2.5 | 1.7 | 1.4 |
| Dispersion | [-] | 8 | 8 | 8 |

## Patentansprüche

1. Oligomere Organosiliciumverbindungen der allgemeinen Formel I 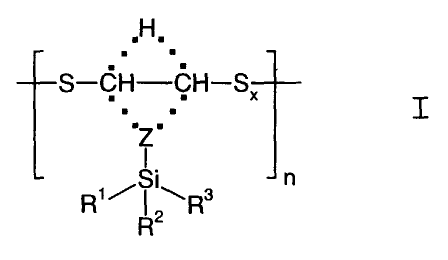 worin
R¹, R², R³, unabhängig voneinander, H, (C₁ - C₄)Alkyl, (C₁ - C₄)Alkoxy, (C₁ - C₄)Haloalkoxy, (C₁ - C₄)Haloalkyl, Phenyl, Aryl oder Aralkyl und Z einen Alkylidenrest
mit
0 - 6 Kohlenstoffatomen bedeuten, x im statistischen Mittel 1 - 6 und n = 1 - 150 sein kann und . . . bedeutet, daß Z sowohl an das eine oder das andere C-Atom gebunden sein kann und die jeweilige freie Valenz durch einen Wasserstoff besetzt ist.

2. Oligomere Organosiliciumverbindungen gemäß Anspruch 1,
**dadurch gekennzeichnet,**
daß R¹, R², R³ = Ethoxy, Z = CH₂CH₂ und x = 1 bedeuten.

3. Oligomere Organosiliciumverbindungen gemäß Anspruch 1
oder 2,
**dadurch gekennzeichnet,** daß n = 20 bis 130, bevorzugt 50 bis 100 bedeutet.

4. Verfahren zur Herstellung der oligomeren Organosiliciumverbindungen gemäß Anspruch 1, 2 oder 3,
**dadurch gekennzeichnet,**
daß Verbindungen der allgemeinen Formel II 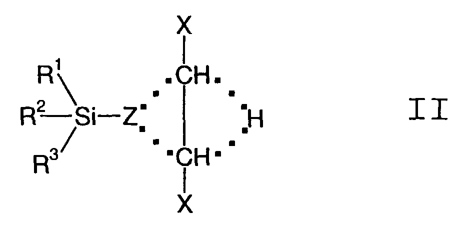 worin
R¹, R², R³, Z,und . . . die in Anspruch 1 oder 2 angegebene Bedeutung besitzen, X gleich Halogen sein kann, mit MSH oder M₂S_{Y},
wobei
M ein Metallion und y im statistischen Mittel eine Zahl zwischen 2 und 6 sein kann oder mit M₂S und S, wobei M ein Metallion ist, gegebenenfalls in einem Lösungsmittel und gegebenenfalls bei Reaktionstemperaturen zwischen 20°C und 150°C und gegebenenfalls unter katalytischen Bedingungen bei Drücken zwischen Normaldruck oder einem Überdruck bis zu 6 bar, zu Verbindungen der allgemeinen Formel I umgesetzt werden.

5. Verfahren gemäß Anspruch 4,
**dadurch gekennzeichnet,**
daß das Metallion ein Ammoniumion, Natriumion oder Kaliumion ist.

6. Oligomere Organosiliciumverbindung, erhältlich nach einem Verfahren gemäß einem der Ansprüche 4 oder 5.

7. Verwendung der oligomeren Organosiliciumverbindungen gemäß einem der Ansprüche 1, 2, 3 oder 6 in Kautschukmischungen.

8. Kautschukmischungen, enthaltend eine oligomere Organosiliciumverbindung gemäß einem der Ansprüche 1, 2, 3 oder 6.

9. Kautschukmischungen gemäß Anspruch 8,
**dadurch gekennzeichnet,**
daß die Organosiliciumverbindung in einer Menge von 0,1 bis 15 Gew.%, bevorzugt 5 bis 10 Gew.-% bezogen auf die Menge des eingesetzten Füllstoffs, eingesetzt wird.

10. Kautschukmischungen gemäß Anspruch 8 oder 9,
**dadurch gekennzeichnet,**
daß sie einen Synthesekautschuk und eine Kieselsäure als Füllstoff enthalten.

11. Verfahren zur Herstellung von Kautschukmischungen gemäß einem der voranstehenden Ansprüche 8 bis 10,
**dadurch gekennzeichnet,**
daß neben dem Kautschuk mindestens ein weiterer Füllstoff und eine oligomere Organosiliciumverbindung gemäß einem der Ansprüche 1, 2, 3 oder 6 verwendet wird.

12. Formkörper, erhältlich aus einer Kautschukmischung gemäß einem der Ansprüche 8 bis 10.

13. Formkörper gemäß Anspruch 12,
**dadurch gekennzeichnet,**
daß es sich um einen Luftreifen handelt.

14. Formkörper gemäß Anspruch 12,
**dadurch gekennzeichnet,**
daß es sich um eine Reifenlauffläche handelt.

15. Verwendung der Kautschukmischungen gemäß einem der Ansprüche 8 bis 10 zur Herstellung von Formkörpern, insbesondere Luftreifen oder Reifenlaufflächen.

16. Verwendung von Verbindungen der allgemeinen Formel II, gemäß Anspruch 4 zur Herstellung von oligomeren Organosiliciumverbindungen gemäß Anspruch 1, 2, 3 oder 6.
